# EUROPÄISCHE PATENTSCHRIFT

(11) **EP 3 450 200 B1**
(45) Veröffentlichungstag und Bekanntmachung des Hinweises auf die Patenterteilung: **29.06.2022**
(21) Anmeldenummer: 17188394.5
(22) Anmeldetag: 29.08.2017
(51) Int. Cl.: B60B 27/00, B60B 27/02, B60B 27/04, B60B 1/00

(54) **RADNABENÜBERTRAGUNGSEINHEIT FÜR EINE RADNABE EINES FAHRZEUGS, RADNABE UND HILFSANGETRIEBENES FAHRZEUG**
WHEEL HUB TRANSMISSION UNIT FOR A WHEEL HUB OF A VEHICLE, WHEEL HUB AND VEHICLE WITH AUXILIARY DRIVE
UNITÉ DE TRANSMISSION DE MOYEU DE ROUE POUR UN MOYEU DE ROUE D'UN VÉHICULE, MOYEU DE ROUE ET VÉHICULE À ENTRAÎNEMENT AUXILIAIRE

(43) Veröffentlichungstag der Anmeldung: 06.03.2019
(73) Patentinhaber: FAZUA GmbH, 85521 Ottobrunn (DE)
(72) Erfinder: Piele, Theodor, 82131 Gauting (DE)
(74) Vertreter: Epping - Hermann - Fischer

(56) Entgegenhaltungen:
- EP-A1- 2 799 327
- DE-A1-102012 016 898
- DE-A1-102012 016 900
- DE-A1-102012 016 903

## Beschreibung

Radnabenübertragungseinheit für eine Radnabe eines Fahrzeugs, Radnabe und hilfsangetriebenes Fahrzeug Die Erfindung betrifft eine Radnabenübertragungseinheit für eine Radnabe eines Fahrzeugs, die Radnabe mit der Radnabenübertragungseinheit und ein hilfsangetriebenes Fahrzeug mit der Radnabe Eine entsprechende Radnabenübertragungseinheit ist beispielsweise aus dem Dokument DE 10 2012 016898 A1 bekannt.

Aufgrund einer zunehmend verbesserten Infrastruktur für Fahrradfahrer in Städten und ländlichen Gebieten, eines steigenden Umweltbewusstseins und/oder eines steigenden Gesundheitsbewusstseins steigt die Anzahl der Fahrradfahrer kontinuierlich an. Zur Realisierung von gewünschten zeitlichen Vorteilen oder zur Erreichung von sportlichen Zielen ist insbesondere ein Fahrrad mit einem elektrischen Hilfsmotor, ein Elektrofahrrad, interessant. Bei dem Elektrofahrrad erzeugt ein Elektromotor ein Drehmoment, das entweder zusätzlich zu einem von Muskelkraft erzeugten Drehmoment oder alleine, das Fahrrad bewegt. Das Elektrofahrrad weist neben den herkömmlichen Antriebsbauteilen, wie eine Tretkurbel, ein Kettenblatt, das an der Tretkurbel montiert ist, ein Ritzel, das in Antriebsrichtung drehstarr am Hinterrad montiert ist, und eine Kette, die das Drehmoment von dem Kettenblatt an das Ritzel überträgt, zusätzlich den Elektromotor, Akkumulatorzellen, die den Elektromotor mit Energie versorgen, und eine Sensorik für eine Bestimmung des benötigten Drehmoments, das der Elektromotor bereitstellt, auf.

Es ist bekannt für die Bestimmung des benötigten zusätzlichen Drehmoments eine Drehmomentmesseinrichtung an der Nabe des Hinterrads vorzusehen. Die Drehmomentmesseinrichtung weist eine Messhülse auf, die aus nicht magnetischem Material hergestellt ist und mit einem entsprechenden Magnetisierungsmuster versehen ist, welches sich unter Einwirkung des Drehmoments auf die Messhülse verändert. Mittels eines elektrisch betriebenen Spulenpaars lässt sich diese Veränderung erfassen, wodurch auf das benötigte Drehmoment geschlossen werden kann. Für eine genaue Messung ist das Spulenpaar unmittelbar benachbart zu der Messhülse anzuordnen, wodurch Positionierungskonflikte mit anderen Bauteilen der Nabe, wie beispielsweise einem Träger für das Ritzel, dem Ritzelnabenträger, hervorgerufen werden. Zudem ist eine möglichst lange Messstrecke für eine ausreichend genaue Messung des Drehmoments zur Verfügung zu stellen. Dies ist zumeist aufgrund von benötigten Lagern zur radialen und/oder axialen Abstützung von Bauteilen nicht uneingeschränkt möglich. Außerdem ist für eine langfristig hohe Detektiergenauigkeit der Messbereich von Verunreinigungen zu schützen.

Aufgabe der Erfindung ist es, eine Radnabenübertragungseinheit für eine Radnabe eines Fahrzeugs, eine Radnabe mit der Radnabenübertragungseinheit und ein hilfsangetriebene Fahrzeug mit der Radnabe zu schaffen, wobei die Radnabenübertragungseinheit einfach, kompakt und robust ausgebildet ist und ein Drehmoment genau detektierbar ist.

Die Aufgabe wird gelöst mit den Merkmalen der Patentansprüche 1, 11 und 13 . Bevorzugte Ausführungsformen dazu sind in den weiteren Patentansprüchen angegeben.

Die erfindungsgemäße Radnabenübertragungseinheit weist die Merkmale des unabhängigen Anspruchs 1 auf.

Der Innenraum weist im Vergleich zu dem Ritzelnabenträger eine größere axiale Erstreckung auf. Ist die Übertragungshülse innerhalb des Innenraums angeordnet, kann sie eine größere axiale Erstreckung als bei herkömmlichen Radnabenübertragungseinheiten, bei denen beispielsweise die Übertragungshülse innerhalb des Ritzelnabenträgers angeordnet ist, aufweisen. An der erfindungsgemäßen Übertragungshülse mit der großen axialen Erstreckung ist das Drehmoment vorteilhaft genau detektierbar. Somit ist an der Übertragungshülse, die im Innenraum angeordnet ist, das Drehmoment besonders genau detektierbar.

Außerdem bildet der Nabenkörper, dadurch dass die Übertragungshülse innerhalb des Innenraums angeordnet ist, ein Gehäuse für die Übertragungshülse. Die Übertragungshülse ist dadurch vor äußeren Einflüssen, beispielhaft Schmutzpartikeln, vorteilhaft schützbar. Das Gehäuse bildet radial nach außen eine für Schmutzpartikel unüberwindbare Barriere. Zudem können an den jeweiligen Längsenden des Nabenkörpers sehr einfach Dichtelemente angeordnet sein, die die Übertragungshülse vor axial eindringenden Schmutzpartikeln schützen. Wird beispielsweise der Ritzelnabenträger ausgetauscht, ist der Innenraum, in dem die Übertragungshülse angeordnet ist, vor äußeren Einflüssen auch während des Austauschs geschützt. Bei einer herkömmlichen Übertragungshülse, die radial innerhalb des Ritzelnabenträgers angeordnet ist, kann beispielhaft die Übertragungshülse vor äußeren Einflüssen während des Austauschs kaum geschützt werden. Dadurch, dass die Übertragungshülse in sämtlichen Betriebsphasen der Radnabenübertragungseinheit vorteilhaft vor äußeren Einflüssen geschützt ist, ist die Übertragungshülse robust und weist zusätzlich eine lange Lebensdauer auf.

Die Übertragungshülse ist mit dem Nabenkörper drehstarr verbunden, weshalb im Betrieb der Radnabe die Übertragungshülse mit derselben Drehzahl wie der Nabenkörper rotiert. Zur Erfassung von Betriebszuständen wie beispielhaft einer Geschwindigkeit ist eine Kenntnis der Drehzahl unerlässlich. Herkömmlich wird, dadurch dass beispielhaft die Übertragungshülse via einen Freilauf nicht drehstarr mit dem Nabenkörper verbunden ist, die Drehzahl an einer anderen Position als das Drehmoment detektiert. Durch die erfindungsgemäße Konstruktion ist die Übertragungshülse drehstarr mit dem Nabenkörper verbunden, so dass die Messeinheit sowohl das Drehmoment als auch die Drehzahl detektieren und wahlweise über nur eine Übertragungsleitung ausgeben kann. Somit werden weniger und/oder kürzere Leitungen benötigt und zusätzlich ist auch die Drehzahlmessung vor äußeren Einflüssen geschützt, da sie auch innerhalb des Innenraums anordenbar ist. Die Radnabenübertragungseinheit ist dadurch vorteilhaft kompakt und einfach aufgebaut.

Dadurch, dass die Übertragungshülse axial neben dem Ritzelnabenträger angeordnet ist, ist der Bauraum radial innerhalb des Ritzelnabenträgers frei von der Übertragungshülse und der Messeinheit. Wird beispielhaft ein Ritzelnabenträger mit geringerem Durchmesser verbaut, kann dies mit relativ geringen konstruktiven Änderungen realisiert werden. Die Übertragungshülse und die Messeinheit sind von den konstruktiven Änderungen kaum betroffen. Wären die Übertragungshülse und die Messeinheit, wie herkömmlich üblich, beispielsweise innerhalb des Ritzelnabenträgers angeordnet, müsste die gesamte Radnabenübertragungseinheit umkonstruiert werden. Dadurch ist die Radnabenübertragungseinheit zusätzlich vorteilhaft einfach aufgebaut.

Bevorzugt ist die Abtriebskupplung am Bereich eines Längsendes des Nabenkörpers, das dem Ritzelnabenträger abgewandt ist, zum Koppeln des Nabenkörpers mit der Übertragungshülse festgelegt, wobei der Bereich des Längsendes des Nabenkörpers in axialer Richtung zu dem Ritzelnabenträger hin von einer gedachten senkrecht zum Messbereich stehenden Ebene, die an dem dem Ritzelnabenträger abgewandte Längsende des Messbereichs anliegt, begrenzt ist.

Der Messbereich ist von dem magnetisch codierten Material gebildet und erstreckt sich zylindrisch und konzentrisch zur Drehachse. Die Abtriebskupplung ist an demjenigen Bereich des Nabenkörpers angeordnet, der axial weiter von dem Ritzelnabenträger entfernt ist als der Messbereich. Vorteilhaft ist dadurch die Antriebskupplung am Nabenkörper an demjenigen Bereich festgelegt, der axial weiter von dem Ritzelnabenträger beabstandet ist als der Messbereich, weshalb die Radnabenübertragungseinheit robust und einfach aufgebaut ist.

Beispielhaft kann eine Abtriebskupplung verbaut werden, die eine relativ lange axiale Erstreckung aufweist, wobei das eine Längsende der Abtriebskupplung an dem Bereich des Längsendes des Nabenkörpers und das andere Längsende der Abtriebskupplung an der Übertragungshülse angeordnet ist. Es ist somit möglich verschiedenen Abtriebskupplungen mit unterschiedlichen axialen Erstreckungen zu verbauen.

Bevorzugt ist die Abtriebskupplung am Bereich eines Längsendes der Übertragungshülse, das dem Ritzelnabenträger abgewandt ist, zum Koppeln des Nabenkörpers mit der Übertragungshülse festgelegt, wobei sich der Bereich des Längsendes der Übertragungshülse in axialer Richtung zu dem Ritzelnabenträger hin bis zum Messbereich erstreckt.

Dadurch, dass der Bereich des Längsendes der Übertragungshülse in axialer Richtung zu dem Ritzelnabenträger von dem Messbereich begrenzt ist, kann die Abtriebskupplung an der Übertragungshülse nur an demjenigen Bereich angeordnet werden, der axial weiter von dem Ritzelnabenträger entfernt ist als der gesamte Messbereich. Dadurch weist die Radnabenübertragungseinheit einen besonders einfachen axialen Aufbau auf.

Bevorzugt überbrückt die Übertragungshülse eine Distanz, die mindestens von einer ersten für Speichen vorgesehenen Anbindungsebene an einem der Längsenden des Nabenkörpers bis hin zu einer zweiten für Speichen vorgesehenen Anbindungsebene an dem anderen der Längsenden des Nabenkörpers reicht.

Die für Speichen vorgesehene Anbindungsebene ist diejenige Ebene, die senkrecht zur axialen Erstreckung des Nabenkörpers angeordnet ist und in Umfangsrichtung des Nabenkörpers mehrere Anbindungsstellen für die Speichen schneidet. Der Nabenkörper weist zumeist zwei dieser Ebenen an jeweils einem der Längsenden auf. Es ist jedoch auch denkbar, dass der Nabenkörper an mindestens einem der Längsenden mehrere solcher Ebenen aufweist. Dies tritt insbesondere dann auf, wenn an einem der Längsenden des Nabenkörpers die Speichen zumindest teilweise nebeneinander montiert sind. Die Anbindungsstellen für Speichen sind beispielhaft Öffnungen oder Bohrungen am Nabenkörper an denen die Speichen einhängbar sind.

Weist eines der Längsenden des Nabenkörpers mehrere dieser Anbindungsebenen auf, überbrückt die Übertragungshülse bevorzugt die Distanz von einer mittig zwischen den Anbindungsebenen an dem einen Längsende des Nabenkörpers angeordneten Anbindungsebene bis zu einer zweiten mittig zwischen den Anbindungsebenen an dem anderen Längsendes des Nabenkörpers angeordneten Anbindungsebene. Eine andere Distanz, beispielhaft zwischen den beiden äußersten oder innersten Ebenen, kann ebenso überbrückt sein.

Dadurch, dass die Übertragungshülse diese Distanzen überbrückt weist sie eine besonders große axiale Erstreckung auf, wodurch auch die axiale Erstreckung des Messbereichs vorteilhaft groß ausgebildet ist. Dadurch, dass die axiale Erstreckung des Messbereichs vorteilhaft groß ausgebildet ist, ist eine Verbesserung der Detektiergenauigkeit der Radnabenübertragungseinheit möglich.

Bevorzugt ist die Übertragungshülse eingerichtet, dass die axiale Komponente des Kraftflusses entlang der gesamten Übertragungshülse gleichsinnig ist. Der Kraftfluss bezeichnet einen Weg einer Kraft und/oder eines Moments in einem Bauteil von einem Angriffspunkt, einer Stelle der Einleitung, bis zu einer Stelle, an der die Kraft und/oder das Moment durch eine Reaktionskraft und/oder ein Reaktionsmoment aufgenommen werden. Die axiale Komponente des Kraftflusses bezeichnet die Komponente, die in Orientierung der Drehachse wirkt. Beispielhaft ist das Vorzeichen der axialen Komponente des Kraftflusses entlang der gesamten Übertragungshülse ein Plus. Sollte die axiale Komponente bereichsweise gleich Null sein entspricht dies keinem Vorzeichenwechsel.

Dadurch, dass das Vorzeichen der axialen Komponente des Kraftflusses entlang der gesamten Übertragungshülse unverändert bleibt, ändert sich die axiale Orientierung des Kraftflusses entlang der gesamten Übertragungshülse nicht. Allerdings ist es beispielhaft möglich, dass sich die radiale Orientierung des Kraftflusses entlang der Übertragungshülse ändert. Dadurch weist die Übertragungshülse eine nur in eine einzige Richtung langgestreckte Form auf. Dies kann beispielsweise eine zylindrische Form, eine kegelige Form oder eine Kragform sein, allerdings wären mäanderförmige Formen und dergleichen ausgeschlossen. Dadurch, dass sich die axiale Richtung des Kraftflusses nicht ändert, ist die Drehmomentdetektion nicht von Richtungsänderungen beeinflusst und es kann das Drehmoment besonders vorteilhaft detektiert werden. Zusätzlich weist die Übertragungshülse eine einfache Form auf.

Bevorzugt ist der Messbereich in einem Bereich des Innenraums angeordnet, der in Axialrichtung von zwei gedachten Anbindungsebenen begrenzt ist, wobei die erste dieser Anbindungsebenen an dem einen Längsende des Nabenkörpers die für die Speichen vorgesehene Anbindungsstellen schneidet und die zweite dieser Anbindungsebenen an dem anderen Längsende des Nabenkörpers die für die Speichen vorgesehene Anbindungsstellen schneidet. Dadurch, dass der Messbereich innerhalb dieser zwei gedachten Anbindungsebenen angeordnet ist, weist er eine besonders große axiale Erstreckung auf, wodurch das Drehmoment besonders genau detektierbar ist. Zusätzlich ist der Messbereich vor äußeren Einflüssen, wie beispielsweise Schmutzpartikel, einfach geschützt, da er axial relativ zentral innerhalb des Innenraums angeordnet ist.

Bevorzugt sind der Ritzelnabenträger und die Übertragungshülse im Abstand zueinander angeordnet und die Antriebskupplung überbrückt diesen Abstand. Der Abstand des Ritzelnabenträgers und der Übertragungshülse kann dabei ein axialer Abstand oder ein axialer Abstand und ein radialer Abstand sein, wodurch die Antriebskupplung den radialen Abstand und/oder den axialen Abstand überbrückt.

Erfindungsgemäß ist die Antriebskupplung ein Freilauf. Der Freilauf ist eine nur in eine der möglichen Drehrichtung sperrend wirkende Kupplung. Dabei wird, wenn die Drehzahl der Übertragungshülse größer wird als die Drehzahl des Ritzelnabenträgers, eine Verbindung zwischen den beiden Bauteilen selbsttätig gelöst, wodurch die Übertragungshülse frei weiter rotiert, selbst wenn der Ritzelnabenträger langsamer beziehungsweise gar nicht rotiert.

Erfindungsgemäß weist die Antriebskupplung ein erstes Freilaufbauteil, das drehstarr mit dem Ritzelnabenträger verbunden ist, und ein zweites Freilaufbauteil auf, das drehstarr mit der Übertragungshülse verbunden ist, wobei das erste Freilaufbauteil axial neben dem zweiten Freilaufbauteil angeordnet ist. Dadurch, dass das erste Freilaufbauteil drehstarr mit dem Ritzelnabenträger verbunden ist und das zweite Freilaufbauteil drehstarr mit der Übertragungshülse verbunden ist, ist die selbsttätig lösende Verbindung mittels der Freilaufbauteile relativ einfach realisierbar.

Insbesondere bevorzugt sind das erste Freilaufbauteil und das zweite Freilaufbauteil der Radnabenübertragungseinheit axial verschiebbar. Dadurch, dass das erste Freilaufbauteil insbesondere relativ zu dem Ritzelnabenträger axial verschiebbar ist und das zweite Freilaufbauteil insbesondere relativ zu der Übertragungshülse verschiebbar ist, kann mittels der axialen relativen Bewegung der Freilaufbauteile zueinander die selbsttätig lösende Verbindung hergestellt werden.

Bevorzugt sind das erste Freilaufbauteil und das zweite Freilaufbauteil eingerichtet derart zusammenzuwirken, dass nur in eine der Drehrichtungen des Ritzelnabenträgers das im Wesentlichen gesamte Drehmoment von dem Ritzelnabenträger auf die Übertragungshülse übertragbar ist. Die Freilaufbauteile können beispielhaft mit mindestens einem Zahn versehen sein, der eine sehr steile Flanke und eine sehr flache Flanke aufweist. Rotiert das erste Freilaufbauteil in die eine der Drehrichtungen bildet sich ein selbsthemmender Formschluss zwischen den beiden Bauteilen mittels der ineinandergreifenden Zähne aus, wodurch das Drehmoment übertragbar ist. Rotiert das erste Freilaufelement in die andere Drehrichtung kann sich kein selbsthemmender Formschluss zwischen den beiden Bauteilen ausbilden, da die Zähne aneinander vorbeigleiten, wodurch kein Drehmoment übertragbar ist. Eine Feder kann dabei beispielhaft die Freilaufbauteile immer wieder ineinander drücken. Andere Ausgestaltungen, wie beispielsweise mittels mehrerer Zähne, Kugeln oder anderer Keilelemente, sind ebenso denkbar.

Bevorzugt ist die Übertragungshülse fliegend gelagert. Dadurch, dass die Übertragungshülse fliegend gelagert ist, kann die Messeinheit relativ frei positioniert werden und deren Verkabelung ist vereinfacht.

Erfindungsgemäß weist die Radnabe die Radnabenübertragungseinheit und mindestens eines der Ritzel auf, das auf dem Ritzelnabenträger drehstarr montiert ist, wobei zum Übertragen des Drehmoments in nur eine Drehrichtung von dem Ritzel auf den Nabenkörper dieser mittels der Antriebskupplung mit dem Ritzel drehstarr gekoppelt ist. Das Ritzel kann beispielhaft mittels einer Keilwellenverbindung formschlüssig mit dem Ritzelnabenträger verbunden sein. Beispielhaft können auch mehrere Ritzel an dem Ritzelnabenträger angeordnet sein.

Erfindungsgemäß weist ein hilfsangetriebenes Fahrzeug die Radnabe, ein Antriebsaggregat mit einer Steuerungseinrichtung zum dosierten hilfsweisen Antreiben der Radnabe und die im Innenraum zum Abgreifen des Messbereichs der Übertragungshülse untergebrachte Messeinheit auf, mit der die Steuerungseinrichtung derart ansteuerbar ist, dass das Antriebsmoment des Antriebsaggregats abgestimmt auf das von der Radnabenübertragungseinheit übertragene Drehmoment ist. Die Steuerungseinrichtung steuert aufgrund des detektierten Drehmoments und/oder der detektierten Drehzahl das Antriebsmoment des Antriebsaggregats. Das Antriebsaggregat kann beispielhaft an der Nabe des Hinterrads des Fahrzeugs, an der Nabe des Vorderrads oder an der Tretkurbel angeordnet sein.

Bevorzugt ist das hilfsangetriebenes Fahrzeug ein Elektrofahrrad. Ein Elektrofahrrad kann beispielhaft auch ein Pedelec sein. Das Pedelc ist eine Ausführung des Elektrofahrrads, bei der der Elektromotor Drehmoment abgibt, wenn ein Fahrer gleichzeitig selbst in die Pedale tritt.

Beispielhaft sind der Ritzelnabenträger aus einer Aluminiumlegierung und die Übertragungshülse aus einem hochfesten nichtmagnetischen Stahl hergestellt.

Im Folgenden wird eine bevorzugte Ausführungsform der Erfindung anhand der beigefügten Zeichnungen erläutert.

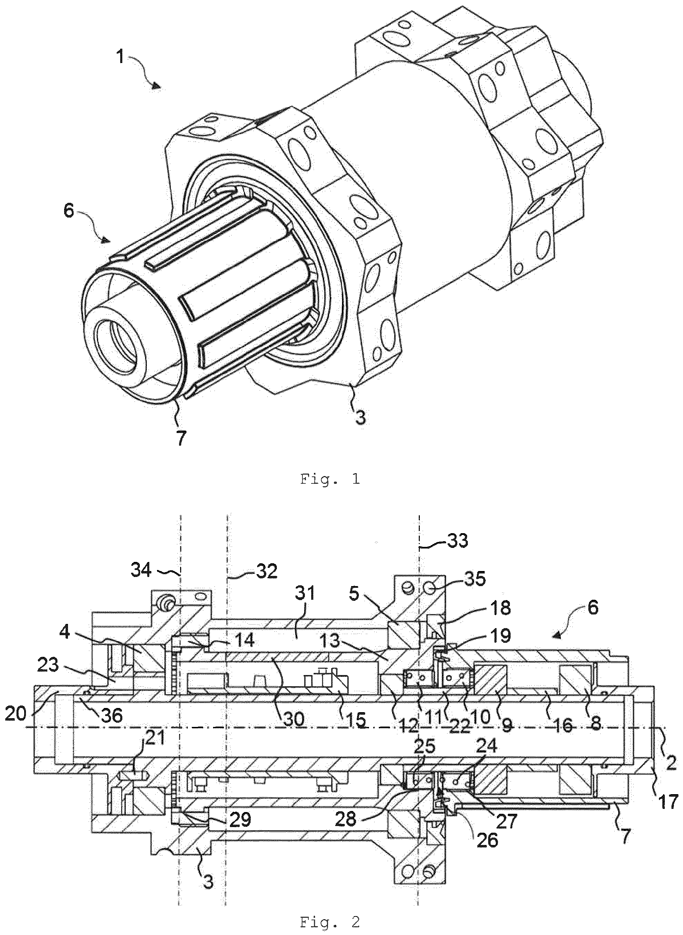

Die Figur 1 zeigt eine perspektivische Darstellung einer Ausführungsform der erfindungsgemäßen Radnabe.

Die Figur 2 zeigt eine Darstellung eines Längsschnitts der Ausführungsform aus der Figur 1.

Wie es aus den Figuren ersichtlich ist, weist eine Radnabe 1 eine Drehachse 2, eine Radnabenübertragungseinheit 6, eine Radachse 36 und einen Nabenkörper 3 auf. Der Nabenkörper 3 und die Radachse 36 sind konzentrisch um die Drehachse 2 angeordnet. Auf der Radachse 36 sind ein erstes Radnabenlager 4 und ein Übertragungshülsenlager 12 angeordnet, die zusammen mit einem zweiten Radnabenlager 5 den Nabenkörper 3 lagern.

Die Radnabenübertragungseinheit 6 weist einen Ritzelnabenträger 7, eine Antriebskupplung 26, eine Übertragungshülse 13, die innerhalb eines Innenraums 31, der von dem Nabenkörper 3 gebildet ist, angeordnet ist, und eine Abtriebskupplung 14 auf.

Die Übertragungshülse 13 ist mittels des Übertragungshülsenlagers 12 und dem zweiten Radnabenlager 5 fliegend gelagert. Via die Abtriebskupplung 14 ist die Übertragungshülse 13 mit dem Nabenkörper 3 drehstarr gekoppelt.

Diese Koppelung kann beispielsweise mittels einer Formschlussverbindung 29 hergestellt sein. Die Übertragungshülse 13 ist zudem mittels der Antriebskupplung 26 mit dem Ritzelnabenträger 7 zumindest in eine Drehrichtung drehstarr gekoppelt. Hierzu weist die Antriebskupplung 26 ein erstes Freilaufbauteil 10 und ein zweites Freilaufbauteil 11 auf. Das erste Freilaufbauteil 10 ist mit dem Ritzelnabenträger 7 drehstarr und axial verschieblich via eine erste Formschlussverbindung 27 gekoppelt und das zweite Freilaufbauteil 11 ist mit der Übertragungshülse 13 drehstarr und axial verschieblich via eine zweite Formschlussverbindung 28 gekoppelt. Zudem weist die Antriebskupplung 26 ein erstes Federbauteil 24 und ein zweites Federbauteil 25 auf. Diese beiden Federbauteile 24, 25 sind derart an der Antriebskupplung 26 angeordnet, dass sie das erste Freilaufbauteil 10 und das zweite Freilaufbauteil 11 aneinander drücken. Die Freilaufbauteile 10, 11 weisen im vorliegenden Ausführungsbeispiel mehrere Zähne auf, die eine sehr steile und eine sehr flache Flanke aufweisen. Die Zähne verkeilen sich aufgrund der Flankenanordnung nur in eine Drehrichtung, in die andere Drehrichtung gleiten sie aneinander vorbei. Die Freilaufbauteile 10, 11 sind beispielhaft als eine Ring ausgebildet und weisen an einem Längsende ein Sägezahnprofil auf.

An der Radachse 36 sind zusätzlich ein erstes Ritzelträgerlager 8 und ein zweites Ritzelträgerlager 9 angeordnet. Der Ritzelnabenträger 7 ist mittels dieser Lager 8, 9 axial und radial gelagert. Mittels einer ersten Abstandshülse 16 kann der benötigte Abstand zwischen dem ersten Ritzelträgerlager 8 und dem zweiten Ritzelträgerlager 9 gehalten werden. Zusätzlich ist eine axiale Position der Lager 8, 9 über ein erstes Achsbauteil 17 einstellbar. Mit einer zweiten Abstandhülse 22 ist der benötigte Abstand zwischen dem zweiten Ritzelträgerlager 9 und dem Übertragungshülsenlager 12 einstellbar. Die Radachse 36 weist an ihrem gegenüberliegenden Ende zusätzlich ein weiteres Achsbauteil 20 auf, mit dem die axiale Position des ersten Radnabenlagers 4 einstallbar ist, zusätzlich weist das Achsbauteil 20 eine Durchgangsöffnung 23 auf. Für eine Zentrierung des Achsbauteils 20 mit der Radachse 36 ist ein Zentrierstift 21 vorgesehen. Durch die Durchgangsöffnung 23 können beispielhaft Kabel in den Innenraum 31 geführt werden. Eine Verkabelung ist in der vorliegenden Ausführungsform nicht dargestellt. In dem Innenraum 31 ist außerdem eine Messeinheit 15 in unmittelbarer Nähe zur Übertragungshülse 13 angeordnet. Die Messeinheit 15 detektiert an einem Messbereich 30 der Übertragungshülse 13 ein Messsignal. Mit diesem Messsignal kann auf ein an der Übertragungshülse 13 anliegendes Drehmoment und/oder auf eine herrschende Drehzahl geschlossen werden.

Eine Ebene 32 grenzt an ein Längsende des Messbereichs 30, das dem Ritzelnabenträger 7 abgewandt ist. Die Ebene 32 ist zusätzlich senkrecht zur Drehachse 2 angeordnet. In den Figuren sind zusätzlich zwei weitere Ebenen, eine erste Anbindungsebene 33 und eine zweite Anbindungsebene 34 dargestellt. Die erste Anbindungsebene 33 ist an jenem Längsende des Nabenkörpers 3 angeordnet, das dem Ritzelnabenträger 7 zugewandt ist und die zweite Anbindungsebene 34 ist an jenem Längsende des Nabenkörpers 3 angeordnet, das dem Ritzelnabenträger 7 abgewandt ist. Zusätzlich sind die Anbindungsebenen 33, 34 senkrecht zur Drehachse 2 und mittig zwischen Anbindungsstellen 35 für Speichen an einem der Längsenden des Nabenkörpers 3 angeordnet.

Zur Abdichtung des Innenraums 31 vor äußeren Einflüssen, wie beispielsweise Schmutzpartikeln, ist in der vorliegenden Ausführungsform ein erstes Dichtelement 18 und ein zweites Dichtelement 19 vorgesehen. Das erste Dichtelement 18 dichtet zwischen dem Nabenkörper 3 und der Übertragungshülse 13 ab und das zweite Dichtelement 19 dichtet zwischen der Übertragungshülse 13 und dem Ritzelnabenträger 7 ab.

Zum Antreiben des Nabenkörpers 3 wirkt auf ein Ritzel (nicht dargestellt), das an dem Ritzelnabenträger 7 drehstarr montiert ist, das Drehmoment, das entsprechend einem Antriebsdrehsinn orientiert ist. Das erste Freilaufbauteil 10 und das zweite Freilaufbauteil 11 der Antriebskupplung 26 formen eine formschlüssige Verbindung, wodurch das Drehmoment von dem Ritzel via den Ritzelnabenträger 7 und die Antriebskupplung 26 auf die Übertragungshülse 13 übertragen wird. Dadurch, dass die Übertragungshülse 13 mit dem Nabenkörper 3 via die Abtriebskupplung 14 drehstarr gekoppelt ist, wird der Messbereich 30 der Übertragungshülse 13 tordiert. Ein auf dem Messbereich 30 angeordnetes Magnetisierungsmuster verändert sich in Abhängigkeit der Stärke der Torsion. Diese Veränderung wird von der Messeinheit 15 detektiert und mithilfe der Verkabelung entlang der Durchgangsöffnung 23 nach außerhalb geführt. Die Übertragung der detektierten Signale kann beispielhaft auch kabellos erfolgen.

### Bezugszeichenliste

- 1.: Radnabe
- 2.: Drehachse
- 3.: Nabenkörper
- 4.: erstes Radnabenlager
- 5.: zweites Radnabenlager
- 6.: Radnabenübertragungseinheit
- 7.: Ritzelnabenträger
- 8.: erstes Ritzelträgerlager
- 9.: zweites Ritzelträgerlager
- 10.: erstes Freilaufbauteil
- 11.: zweites Freilaufbauteil
- 12.: Übertragungshülsenlager
- 13.: Übertragungshülse
- 14.: Abtriebskupplung
- 15.: Messeinheit
- 16.: erste Abstandshülse
- 17.: erstes Achsbauteil
- 18.: erstes Dichtelement
- 19.: zweites Dichtelement
- 20.: zweites Achsbauteil
- 21.: Zentrierstift
- 22.: zweite Abstandshülse
- 23.: Durchgangsöffnung
- 24.: erstes Federbauteil
- 25.: zweites Federbauteil
- 26.: Antriebskupplung
- 27.: erste Formschlussverbindung
- 28.: zweite Formschlussverbindung
- 29.: dritte Formschlussverbindung
- 30.: Messbereich
- 31.: Innenraum
- 32.: Ebene
- 33.: erste Anbindungsebene
- 34.: zweite Anbindungsebene
- 35.: Anbindungsstellen
- 36.: Radachse

## Patentansprüche

1. Radnabenübertragungseinheit (6) für eine Radnabe (1) eines Fahrzeugs, mit einer Drehachse (2), einem konzentrisch zur Drehachse (2) angeordneten Ritzelnabenträger (7), auf den zum Antreiben der Radnabe (1) mindestens ein Ritzel drehstarr montierbar ist, einem Nabenkörper (3), der axial neben dem Ritzelnabenträger (7) angeordnet ist und einen konzentrisch um die Drehachse (2) angeordneten Innenraum (31) aufweist, einer Übertragungshülse (13), die konzentrisch um die Drehachse (2) innerhalb des Innenraums (31) angeordnet ist und ein magnetisch codiertes Material aufweist, das einen Messbereich (30) der Übertragungshülse (13) bildet, und einer Antriebskupplung (26), mit der der Ritzelnabenträger (7) mit seinem dem Nabenkörper (3) zugewandten Längsende und die Übertragungshülse (13) mit ihrem dem Ritzelnabenträger (7) zugewandten Längsende gekoppelt ist, sowie einer Abtriebskupplung (14), mit der die Übertragungshülse (13) mit ihrem anderen Längsende mit dem Nabenkörper (3) gekoppelt ist, so dass ein Drehmoment von dem Ritzelnabenträger (7) auf den Nabenkörper (3) via die Antriebskupplung (26), die Abtriebskupplung (14) und der Übertragungshülse (13) übertragbar ist, wobei in dem Innenraum 31 eine Messeinheit (15) angeordnet ist, die eingerichtet ist, an dem Messbereich (30) der Übertragungshülse (13) ein Messsignal zu detektieren, so dass mit dem Messbereich (30) der Übertragungshülse (13) mithilfe der unter Einfluss des Drehmoments sich ändernden magnetischen Eigenschaften des magnetisch codierten Materials das Drehmoment im Innenraum (31) detektierbar ist, indem mit dem Messsignal auf das an der Übertragungshülse (13) anliegende Drehmoment zurückgeschlossen wird, wobei die Antriebskupplung (26) ein Freilauf ist und die Antriebskupplung (26) ein erstes Freilaufbauteil (10), das drehstarr mit dem Ritzelnabenträger (7) verbunden ist, und ein zweites Freilaufbauteil (11), das drehstarr mit der Übertragungshülse (13) verbunden ist, aufweist **dadurch gekennzeichnet, dass** das erste Freilaufbauteil (10) axial neben dem zweiten Freilaufbauteil (11) angeordnet ist.

2. Radnabenübertragungseinheit (6) gemäß Anspruch 1, wobei die Abtriebskupplung (14) am Bereich eines Längsendes des Nabenkörpers (3), das dem Ritzelnabenträger abgewandt ist, zum Koppeln des Nabenkörpers (3) mit der Übertragungshülse (13) festgelegt ist, wobei der Bereich des Längsendes des Nabenkörpers (3) in axialer Richtung zu dem Ritzelnabenträger (7) hin von einer gedachten senkrecht zum Messbereich (30) stehenden Ebene (32), die das dem Ritzelnabenträger (7) abgewandte Längsende des Messbereichs (30) schneidet, begrenzt ist.

3. Radnabenübertragungseinheit (6) gemäß Anspruch 1 oder 2, wobei die Abtriebskupplung (14) am Bereich eines Längsendes der Übertragungshülse (13), das dem Ritzelnabenträger (7) abgewandt ist, zum Koppeln des Nabenkörpers (3) mit der Übertragungshülse (13) festgelegt ist, wobei sich der Bereich des Längsendes der Übertragungshülse (13) in axialer Richtung zu dem Ritzelnabenträger (7) hin bis zum Messbereich (30) erstreckt.

4. Radnabenübertragungseinheit (6) gemäß einem der Ansprüche 1, bis 3, wobei die Übertragungshülse (13) eine Distanz, die mindestens von einer ersten für Speichen vorgesehenen Anbindungsebene (33) an einem der Längsenden des Nabenkörpers (3) bis hin zu einer zweiten für Speichen vorgesehenen Anbindungsebene (34) an dem anderen der Längsenden des Nabenkörpers (3) reicht, überbrückt.

5. Radnabenübertragungseinheit (6) gemäß einem der Ansprüche 1 bis 4, wobei die Übertragungshülse (13) eingerichtet ist, dass die axiale Komponente des Kraftflusses entlang der gesamten Übertragungshülse (13) gleichsinnig ist.

6. Radnabenübertragungseinheit (6) gemäß einem der Ansprüche 1 bis 5, wobei der Messbereich (30) in einem Bereich des Innenraums (31) angeordnet ist, der in Axialrichtung von zwei gedachten Ebenen begrenzt ist, wobei die erste dieser Ebenen an dem einen Längsendes des Nabenkörpers (3) für Speichen vorgesehene Anbindungsstellen schneidet und die zweite dieser Ebenen an dem anderen Längsende des Nabenkörpers (3) für Speichen vorgesehene Anbindungsstellen schneidet.

7. Radnabenübertragungseinheit (6) gemäß einem der Ansprüche 1 bis 6, wobei der Ritzelnabenträger (7) und die Übertragungshülse (13) im Abstand zueinander angeordnet sind und die Antriebskupplung (26) diesen Abstand überbrückt.

8. Radnabenübertragungseinheit (6) gemäß einem der Ansprüche 1 bis 7, wobei das erste Freilaufbauteil (10) und das zweite Freilaufbauteil (11) der Radnabenübertragungseinheit (6) axial verschiebbar sind.

9. Radnabenübertragungseinheit (6) gemäß einem der Ansprüche 1 bis 8, wobei das erste Freilaufbauteil (10) und das zweite Freilaufbauteil (11) eingerichtet sind derart zusammenzuwirken, dass nur in eine Drehrichtung des Ritzelnabenträgers (7) das im Wesentlichen gesamte Drehmoment von dem Ritzelnabenträger (7) auf die Übertragungshülse (13) übertragbar ist.

10. Radnabenübertragungseinheit (6) gemäß einem der Ansprüche 1 bis 9, wobei die Übertragungshülse (13) fliegend gelagert ist.

11. Radnabe (1) mit einer Radnabenübertragungseinheit (6) gemäß einem der Ansprüche 1 bis 10 und mindestens einem Ritzel, das auf dem Ritzelnabenträger (7) drehstarr montiert ist, wobei zum Übertragen des Drehmoments in nur eine Drehrichtung von dem Ritzel auf den Nabenkörper (3) dieser mittels der Antriebskupplung (26) mit dem Ritzel drehstarr gekoppelt ist.

12. Hilfsangetriebenes Fahrzeug mit einer Radnabe (1) gemäß Anspruch 11, einem Antriebsaggregat mit einer Steuerungseinrichtung zum dosierten hilfsweisen Antreiben der Radnabe (1) und eine im Innenraum (31) zum Abgreifen des Messbereichs (30) der Übertragungshülse (13) untergebrachte Messeinheit (15), mit der die Steuerungseinrichtung derart ansteuerbar ist, dass das Antriebsmoment des Antriebsaggregats abgestimmt auf das von der Radnabenübertragungseinheit (6) übertragene Drehmoment ist.

13. Hilfsangetriebenes Fahrzeug gemäß Anspruch 12, wobei das hilfsangetriebene Fahrzeug ein Elektrofahrrad ist.

## Claims

1. A wheel hub transmission unit (6) for a wheel hub (1) of a vehicle, comprising a rotational axis (2), a sprocket hub support (7) which is arranged concentrically with the rotational axis (2) and to which at least one sprocket can be mounted in a torsionally rigid manner for driving the wheel hub (1), a hub body (3) which is arranged axially beside the sprocket hub support (7) and has an interior space (31) arranged concentrically around the rotational axis (2), a transmission sleeve (13) which is arranged concentrically around the rotational axis (2) within the interior space (31) and comprises a magnetically coded material which forms a measuring zone (30) of the transmission sleeve (13), and a drive clutch (26) to which the sprocket hub support (7) is coupled with its longitudinal end facing the hub body (3) and to which the transmission sleeve (13) is coupled with its longitudinal end facing the sprocket hub support (7), as well as an output clutch (14) by means of which the transmission sleeve (13) is coupled to hub body (3) with its other longitudinal end, so that a torque can be transferred from the sprocket hub support (7) to the hub body (3) via the drive clutch (26), the output clutch (14) and the transmission sleeve (13), wherein a measuring unit (15) is arranged in the interior space (31), the measuring unit being adapted to detect a measuring signal on the measuring zone (30) of the transmission sleeve (13), so that the measuring zone (30) of the transmission sleeve (13) is capable of detecting the torque in the interior space (31) by means of the magnetic properties of the magnetically coded material that will change under the influence of the torque, by using the measuring signal for drawing conclusions about the torque applied to the transmission sleeve (13), wherein the drive clutch (26) is a free wheel and the drive clutch (26) comprises a first freewheeling component (10) which is connected to the sprocket hub support (7) in a torsionally rigid manner, and a second freewheeling component (11) which is connected to the transmission sleeve (13) in a torsionally rigid manner, **characterized in that** the first freewheeling component (10) is arranged axially beside the second freewheeling component (11).

2. The wheel hub transmission unit (6) according to claim 1, wherein the output clutch (14) is fixed in the area of a longitudinal end of the hub body (3), facing away from the sprocket hub support, for coupling the hub body (3) to the transmission sleeve (13), wherein the area of the longitudinal end of the hub body (3) in axial direction toward the sprocket hub support (7) is limited by an imaginary plane (32) which extends perpendicular to the measuring zone (30) and intersects with the longitudinal end of the measuring zone (30) facing away from the sprocket hub support (7).

3. The wheel hub transmission unit (6) according to claim 1 or 2, wherein the output clutch (14) is fixed in the area of a longitudinal end of the transmission sleeve (13), facing away from the sprocket hub support (7), for coupling the hub body (3) to the transmission sleeve (13), wherein the area of the longitudinal end of the transmission sleeve (13) in axial direction toward the sprocket hub support (7) extends up to the measuring zone (30).

4. The wheel hub transmission unit (6) according to any of claims 1 to 3, wherein the transmission sleeve (13) spans a distance which extends at least from a first linkage plane (33) provided for spokes at one of the longitudinal ends of the hub body (3) up to a second linkage plane (34) provided for spokes at the other of the longitudinal ends of the hub body (3).

5. The wheel hub transmission unit (6) according to any of claims 1 to 4, wherein the transmission sleeve (13) is adapted such that the axial component of the flux of force points in the same direction along the entire transmission sleeve (13).

6. The wheel hub transmission unit (6) according to any of claims 1 to 5, wherein the measuring zone (30) is arranged in an area of the interior space (31) which is limited in axial direction by two imaginary planes, the first one of said planes intersecting with linkage points provided for spokes at the one longitudinal end of the hub body (3) and the second one of said planes intersecting with linkage points provided for spokes at the other longitudinal end of the hub body (3).

7. The wheel hub transmission unit (6) according to any of claims 1 to 6, wherein the sprocket hub support (7) and the transmission sleeve (13) are arranged at a distance from each other and the drive clutch (26) spans said distance.

8. The wheel hub transmission unit (6) according to any of claims 1 to 7, wherein the first freewheeling component (10) and the second freewheeling component (11) of the wheel hub transmission unit (6) are axially movable.

9. The wheel hub transmission unit (6) according to any of claims 1 to 8, wherein the first freewheeling component (10) and the second freewheeling component (11) are adapted to cooperate in such a manner that essentially the entire torque can be transferred from the sprocket hub support (7) to the transmission sleeve (13) in only one direction of rotation of the sprocket hub support (7).

10. The wheel hub transmission unit (6) according to any of claims 1 to 9, wherein the transmission sleeve (13) is supported in a cantilevered manner.

11. A wheel hub (1) comprising a wheel hub transmission unit (6) according to any of claims 1 to 10 and at least one sprocket which is mounted on the sprocket hub support (7) in a torsionally rigid manner, wherein, for transferring the torque in only one direction of rotation from the sprocket to the hub body (3), the latter is coupled to the sprocket in a torsionally rigid manner by means of the drive clutch (26).

12. A vehicle with auxiliary drive and comprising a wheel hub (1) according to claim 11, a drive assembly including a control device for a metered auxiliary driving of the wheel hub (1) and a measuring unit (15) which is accommodated in the interior space (31) for sensing the measuring zone (30) of the transmission sleeve (13), by means of which the control device can be controlled in such a manner that the driving torque of the drive assembly is matched to the torque transferred by the wheel hub transmission unit (6).

13. The vehicle with auxiliary drive according to claim 12, wherein the vehicle with auxiliary drive is an electric bike.

## Revendications

1. Unité de transmission de moyeu de roue (6) pour un moyeu de roue (1) d'un véhicule, comportant un axe de rotation (2), un porte-moyeu à pignon (7) disposé concentriquement par rapport à l'axe de rotation (2), sur lequel au moins un pignon est montable de manière solidaire en rotation pour entraîner le moyeu de roue (1), un corps de moyeu (3) qui est disposé axialement à côté du porte-moyeu à pignon (7) et présente un espace intérieur (31) disposé concentriquement autour de l'axe de rotation (2), un manchon de transmission (13) qui est disposé concentriquement autour de l'axe de rotation (2) à l'intérieur de l'espace intérieur (31) et présente un matériau codé magnétiquement qui forme une zone de mesure (30) du manchon de transmission (13), et un accouplement d'entraînement (26) avec lequel le porte-moyeu à pignon (7) est couplé avec son extrémité longitudinale tournée vers le corps de moyeu (3) et le manchon de transmission (13) avec son extrémité longitudinale tournée vers le porte-moyeu à pignon (7), ainsi qu'un entraînement de sortie (14) avec lequel le manchon de transmission (13) est couplé au corps de moyeu (3) avec son autre extrémité longitudinale de telle sorte qu'un couple soit transmissible du porte-moyeu à pignon (7) au corps de moyeu (3) via l'accouplement d'entraînement (26), l'accouplement de sortie (14) et le manchon de transmission (13), sachant qu'une unité de mesure (15) qui est configurée pour détecter un signal de mesure au niveau de la zone de mesure (30) du manchon de transmission (13) est disposée dans l'espace intérieur (31) de telle sorte le couple soit détectable dans l'espace intérieur (31) avec la zone de mesure (30) du manchon de transmission (13) moyennant les propriétés magnétiques, variables sous l'effet du couple, du matériau codé magnétiquement en déduisant le couple exercé au niveau du manchon de transmission (13) à partir du signal de mesure, sachant que l'accouplement d'entraînement (26) est en roue libre et l'accouplement d'entraînement (26) présente un premier composant en roue libre (10) qui est relié de manière solidaire en rotation au porte-moyeu à pignon (7), et un deuxième composant en roue libre (11) qui est relié de manière solidaire en rotation au manchon de transmission (13), **caractérisé en ce que** le premier composant en roue libre (10) est disposé axialement à côté du deuxième composant en roue libre (11).

2. Unité de transmission de moyeu de roue (6) selon la revendication 1, sachant que l'accouplement de sortie (14) est fixé au manchon de transmission (13) dans la zone d'une extrémité longitudinale du corps de moyeu (3) qui est opposée au porte-moyeu à pignon pour le couplage du corps de moyeu (3), sachant que la zone de l'extrémité longitudinale du corps de moyeu (3) est limitée en direction axiale vers le porte-moyeu à pignon (7) par un plan imaginaire perpendiculaire à la zone de mesure (30) qui croise l'extrémité longitudinale opposée au porte-moyeu à pignon (7) de la zone de mesure (30).

3. Unité de transmission de moyeu de roue (6) selon la revendication 1 ou 2, sachant que l'accouplement de sortie (14) est fixé au manchon de transmission (13) dans la zone d'une extrémité longitudinale du manchon de transmission (13) qui est opposée au porte-moyeu à pignon (7) pour le couplage du corps de moyeu (3), sachant que la zone de l'extrémité longitudinale du manchon de transmission (13) s'étend en direction axiale vers le porte-moyeu à pignon (7) jusqu'à la zone de mesure (30).

4. Unité de transmission de moyeu de roue (6) selon l'une des revendications 1 à 3, sachant que le manchon de transmission (13) couvre une distance qui va au moins d'un premier plan d'attache (33) prévu pour des rayons au niveau d'une des extrémités longitudinales du corps de moyeu (3) à un deuxième plan d'attache (34) prévu pour des rayons au niveau de l'autre des extrémités longitudinales du corps de moyeu (3).

5. Unité de transmission de moyeu de roue (6) selon l'une des revendications 1 à 4, sachant que le manchon de transmission (13) est configuré pour que la composante axiale du flux de force soit de même sens le long de tout le manchon de transmission (13).

6. Unité de transmission de moyeu de roue (6) selon l'une des revendications 1 à 5, sachant que la zone de mesure (30) est disposée dans une zone de l'espace intérieur (31) qui est limitée en direction axiale par deux plans imaginaires, sachant que le premier de ces plans croise des points d'attache prévus pour des rayons à l'une extrémité longitudinale du corps de moyeu (3) et le deuxième de ces plans croise des points d'attache prévus pour des rayons à l'autre extrémité longitudinale du corps de moyeu (3).

7. Unité de transmission de moyeu de roue (6) selon l'une des revendications 1 à 6, sachant que le porte-moyeu à pignon (7) et le manchon de transmission (13) sont disposés à distance l'un de l'autre et l'accouplement d'entraînement (26) couvre cette distance.

8. Unité de transmission de moyeu de roue (6) selon l'une des revendications 1 à 7, sachant que le premier composant en roue libre (10) et le deuxième composant en roue libre (11) de l'unité de transmission de moyeu de roue (6) sont translatables axialement.

9. Unité de transmission de moyeu de roue (6) selon l'une des revendications 1 à 8, sachant que le premier composant en roue libre (10) et le deuxième composant en roue libre (11) sont configurés pour interagir de telle manière que le couple sensiblement total ne soit transmissible du porte-moyeu à pignon (7) au manchon de transmission (13) que dans un sens de direction du porte-moyeu à pignon (7).

10. Unité de transmission de moyeu de roue (6) selon l'une des revendications 1 à 9, sachant que le manchon de transmission (13) est logé de manière flottante.

11. Moyeu de roue (1) comportant une unité de transmission de moyeu de roue (6) selon l'une des revendications 1 à 10 et au moins un pignon qui est monté de manière solidaire en rotation sur le porte-moyeu à pignon (7), sachant que, pour la transmission du couple dans un seul sens de direction du pignon au corps de moyeu (3), celui-ci est couplé de manière solidaire en rotation au pignon moyennant l'accouplement d'entraînement (26).

12. Véhicule à entraînement auxiliaire comportant un moyeu de roue (1) selon la revendication 11, un ensemble d'entraînement comportant un dispositif de commande pour l'entraînement auxiliaire dosé du moyeu de roue (19) et une unité de mesure (15) logée dans l'espace intérieur (13) pour saisir la zone de mesure (30) du manchon de transmission (13), avec laquelle le dispositif de mesure est pilotable de telle manière que le couple d'entraînement de l'ensemble d'entraînement soit accordé au couple transmis par l'unité de transmission de moyeu de roue (6).

13. Véhicule à entraînement auxiliaire selon la revendication 12, sachant que le véhicule à entraînement auxiliaire est un vélo électrique.
